# NEW EUROPEAN PATENT SPECIFICATION

(11) **EP 2 712 411 B2**
(45) Date of publication and mention of the opposition decision: **18.11.2026**
(45) Mention of the grant of the patent: 11.08.2021
(21) Application number: 12728734.0
(22) Date of filing: 16.05.2012
(51) Int. Cl.: F04D 7/04, F04D 15/00

(54) **CONTROL DEVICE AND PUMP APPARATUS**
STEUERUNGSVORRICHTUNG UND PUMPENGERÄT
DISPOSITIF DE COMMANDE ET APPAREIL DE POMPE

(30) Priority: 17.05.2011 GB 201108171; 12.12.2011 GB 201121293
(43) Date of publication of application: 02.04.2014
(73) Proprietor: Clearwater Controls Limited, Cumbernauld Glasgow G68 9LB (GB)
(72) Inventor: MCIVOR, Graham, Fife KY12 7PG (GB)
(74) Representative: Watson, Craig Simon
(86) International application number: PCT/GB2012/051083
(87) International publication number: WO 2012/156726

(56) References cited:
- EP-A2- 2 025 943
- DE-B- 1 111 508
- JP-A- H08 294 641
- JP-A- S5 489 301
- US-A1- 2010 034 665
- US-A1- 2010 166 569
- US-B1- 6 379 109
- "Emotron M20 Reverse Function", 1 January 2008, EMOTRON AB, article EMOTRON: "Emotron M20 Reverse Function", pages: 1 - 4, XP055755735
- EMOTRON AB: "Emotron M20 Shaft Power Monitor Contents", 1 January 2007 (2007-01-01), XP055755806, Retrieved from the Internet <URL:https://www.emotron.com/globalassets/downloads/products/shaft-power-monitors/emotron-m20/emotron-m20-instruction-manual--earlier-version/emotron_m20_instruction_manual_01-2151-01_r3.en.pdf> [retrieved on 20201202]

## Description

This invention relates to a control device for pumps and to a pump apparatus comprising the control device.

Pump blockages contribute a significant cost to water authorities operational spend by having to attend site to unblock to avoid floods to the local area and associated damage of reputation if they occur.

It would be beneficial to mitigate the amount of maintenance used for certain pumps, especially those pumping wastewater.

Moreover, it would be beneficial to improve the power efficiency of pumps.

An object of the present invention is to mitigate the maintenance requirements and/or improve the power efficiency of pumps.

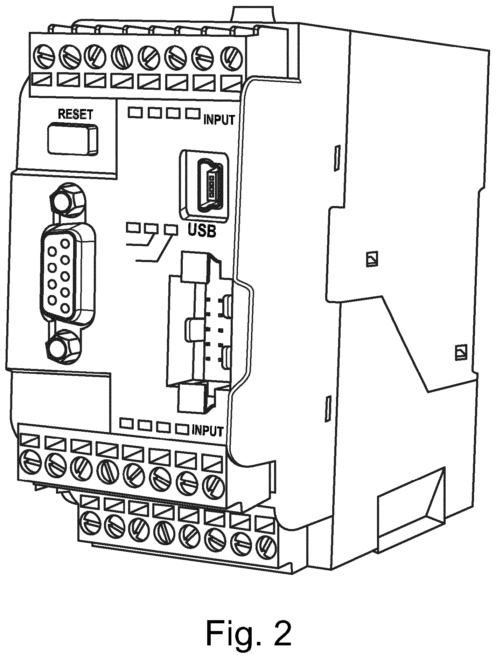

US 6,254,353 discloses a method and apparatus for controlling operation of a submersible pump and discloses a variable speed pump, evidenced by Fig. 2 which shows a rectifier circuit and a 3 phase H-bridge.

US 2010/0034665 discloses a pump comprising a variable frequency drive means and methods for operating such pumps including detecting the current drawn by the pump, the speed, wet well level and comparing the detected values with stored values in a look up table to determine whether the pump is blocked.

US6379109 discloses a waterproof vibration sensor mounted within sensing range of a rotating shaft of an aerator propeller. The sensor is operably connected to the propeller motor so that when the sensor detects excessive rotating shaft vibrations caused by debris attached to the propeller, the motor is automatically shut down and then run in the reverse direction causing the debris to be thrown off the propeller.

Once the debris have been dislocated from the propeller, the motor is restarted in the forward direction. If the sensor continues to detect excessive motor shaft vibration, the motor will once again be shut down and then run in the reverse direction.

Emotron's M20 Shaft Power Monitor with Reverse Function which is on the market since 2008 discloses a control device with power based unclogging sequences.

According to a first aspect of the present invention, there is provided a pump apparatus as claimed in claim 1.

Thus the present invention claims a mechanically switched pump, rather than the relatively complex variable speed pump shown in US 6,254,353. Moreover, the present invention monitors the torque of the pump whereas US 6,254,353 monitors the frequency of the pump (as detailed in e.g. Fig. 11, Fig. 13 and claim 1). The inventor of the present invention has discovered an important benefit of such an approach. The present invention can detect when a pump is labouring (but the output is not necessarily changing) because of a blockage starting to occur, and can take remedial action at this early stage. In contrast relying on monitoring the frequency of a pump will only suggest a blockage when the pump is unable (not merely labouring) to maintain the desired frequency, which will often be when the blockage is more severe. Embodiments of the present invention therefore can take remedial action at an earlier stage of a blockage, which is more effective at clearing the blockage and/or minimising the time taken to clear the blockage.

A mechanical switched pump is one which is activated by a mechanical switch and so can take up the forward, stop, or reverse modes. Suitable mechanically switched pumps include direct online pumps or Star/Delta pumps.

In contrast, soft start and Variable Speed Drive (VSD) pumps can ramp up gradually the speed of the pump and are not mechanically switched pumps.

The pump may have a power rating less than 25kw, optionally less than (but not totally restricted to less than) 9kW, sometimes less than 7.5kw.

Also disclosed herein is a pump apparatus comprising a pump and a control device for a pump, the pump having a power rating of less than 25kw, optionally less than 9kW, more optionally less than 7.5kw and capable of being operated in a forward and a reverse direction, the control device comprising:
a monitoring mechanism to monitor the torque of the pump,
a control mechanism to control the direction of the pump and being capable of selectively directing the pump to (i) stop (ii) operate in a reverse direction and (iii) operate in a forward direction;
wherein the control mechanism is adapted to control the pump to do at least one of (a) stop and (b) operate in a reverse direction when the monitoring mechanism detects a pre-determined value in the torque of the pump.

The pump according to the above disclosure is typically a mechanically switched pump.

Also disclosed herein is a method of fitting a control device as herein described to a pump as herein described. Indeed, the present invention allows control devices to be retro-fitted to pumps in situ.

The response of the control mechanism when the monitoring mechanism detects a pre-determined value in the torque of the pump is to control the pump to (a) stop. That is, power to the pump is stopped and the pump is allowed to coast to a rest. The pump is then put into a reverse direction. The pump is stopped again and put into a forward direction.

The control mechanism is adapted to direct the pump into a series of reverse and forward cycles with a user adjustable stopping period of 0-30s but not limited thereto between direction changes. This allows the pump to come to a rest before direction change and so reduces stress on the pumps.

The control mechanism is adapted to direct the pump into a series of reverse and forward cycles (with said delays between forward and reverse directions) of the pump until a further pre-determined value of pump torque is reached. The first and second pre-determined values are often the same although may be different.

This in use, when the torque is noted to be above a certain value, then the pump woulb be directed through a series of reverse, then forward, the reverse directions, until the torque detected by the monitoring mechanism is below a pre-determined value or the number of clean attempts exceeds a predefined maxi-mum attempts.

Typically each stage in the cycle (forward and reverse) lasts for 3 to 20 seconds. The monitoring mechanism measures the torque of the pump by measuring the current at which the pump is operating. When the current is increased this is indicative of rag or blockage on the pump which is inhibiting its operation. Once the rag causes an increase in current above the pre-defined level, the control mechanism will proceed to reverse (and cycle from reverse forward and back with time delay between direction changes) to remove debris causing the rag.

The monitoring mechanism may also be adapted to monitor the pump current with regard to potential overloading of the pump.

Standards for excess current being directed to pumps are often imposed by regulatory authorities to safeguard overheating. These limits, which depend on a number of different variables, can be stored by the device and the control mechanism may be adapted to control the pump or another device in response to an overload breaching a pre-determined safety level, which is indicative of the pump overheating. Other devices the control mechanism may control include alarms. Preferably the control device, comprising the components for monitoring the torque of the pump and the components adapted to monitor the potential overloading of the pump are provided on the same device.

Thus the monitoring mechanism to monitor the output of the pump and the monitoring mechanism to monitor the thermal stability of the pump may be provided on the same device.

The monitoring mechanism may also comprise a monitoring means to detect any sudden change or short circuit in the current supplied to the motor, and the control mechanism is normally adapted to suitably respond to such an event, for example by shutting down the pump.

The pump is a pump for pumping viscous fluids such as sewage and sludge, wastewater, grit etc.

Preferably on start-up, the pump proceeds through a reverse and forward cycle.

Preferably the pump starts at full power, without a restriction in power supplied, optionally with reverse and forward cycle immediately after start-up.

An advantage of the invention is that pump may be cleared of debris without manual intervention, reducing pump downtime and costs associated with pump maintenance.

A further advantage of the invention is that the pumps may be more efficient because the rag on them may be cleared more frequently than using manual intervention.

A further advantage of certain embodiments of the invention is that the control device may be provided on a single device, thus saving space.

Moreover it is very useful to allow such a device to be retro-fitted, and certain embodiments benefit from this feature.

The cycle(s) of reverse and forward pumping actions described herein may be referred to as anti-ragging functionality.

The device may be programmed to provide anti-ragging functionality whilst providing traditional electrical pump protections. The physical size of the device has been minimised which enables greater use of the product. Preferably the size is less than 104mmH x 45mmW x 200mmD .

The device is particularly useful for small to medium pumping stations, such as those operated with pumps having a power of less than 9kW, optionally less than 7.5kw.

Traditionally larger pumping stations would be controlled with Variable Speed Drives (VSD) which is less preferred to the smaller (<9kW) mechanically switched pumps preferred in the present invention.

An advantage of the invention is that the pump apparatus of the present invention may be less expensive to manufacture, compared with VSD devices, which may be ten times the cost of mechanical switching devices. Thus embodiments of the invention provide a benefit of having a responsive pump control without the expense of a VSD system. A benefit of certain embodiments is that this functionality is provided in the same device used to monitor the potential overloading of the pump apparatus and so additional functionality may be provided to the pump apparatus within the, often limited, confines of the existing pump apparatus.

Thus embodiments of the invention provide de-ragging functionality somewhat akin to VSD at a fraction of the cost therefore, making it more economical for smaller stations. Also, the device is preferably designed to be retro-fitted into existing stations and is physically much smaller (<250cm²) than any VSD.

The device can be easily retro fitted into existing starter panels as it replaces thermal/electronic overload devices. The system monitors the current in real time and upon a slight over current can begin a de-ragging sequence.

The sequence is completely customisable and the event that triggers the sequence can be changed or more events can be added i.e. on each start event.

Pumps used in the present invention should be capable of being operated in the forward or reverse direction. This includes pumps where the existing control system only functions to direct them in a forward direction and a stop position and not a reverse direction.

Embodiments of the present invention will now be described, by way of example only, with reference to the accompanying figures, in which:
Fig. 1 is a flowchart showing the stages of a device in accordance with the present invention;
Figs. 2 and 3 are views of an embodiment in accordance with the present invention,
Fig. 4 is a circuit diagram indicating electrical connections and a typical retro-fit installation.

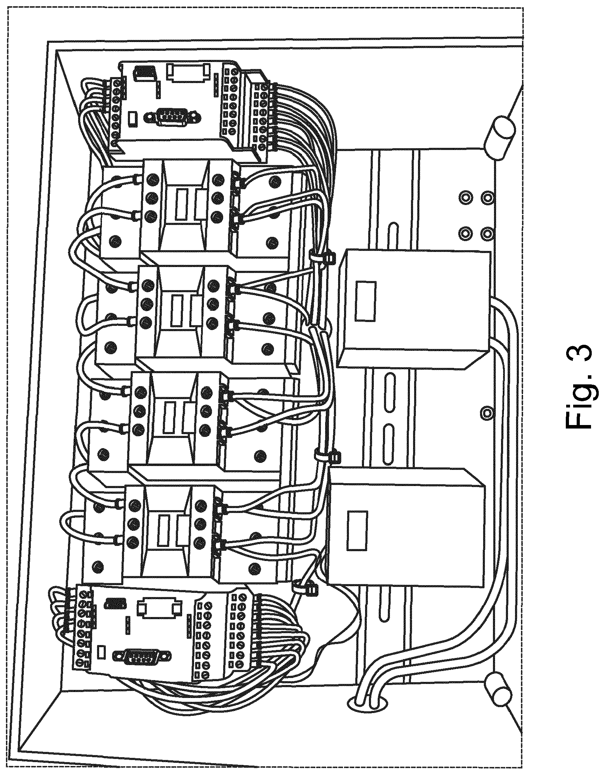

The device 10, shown in Figs. 2 - 3, is a hardware and software solution. The device measures real time current on the three conductors supplying a pump via current transducers (CT's). From this current, the device knows the loading of the motor during operation.

During commissioning of the pump the low and high current consumptions are recorded. A set point of around 10% is added to the high level and 10% subtracted from the low level. These set points are entered into the device to provide the pre-determined "activation level".

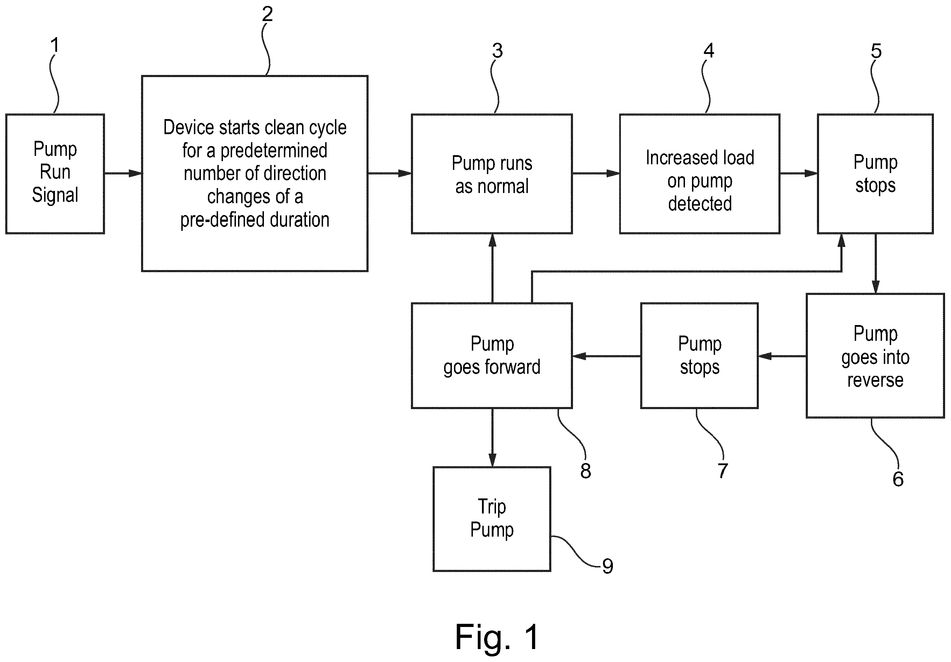

As shown in Fig. 1, the pump is first turned on 1 and it will run through a start-up clean cycle for a pre-determined number of direction changes of a pre-defined duration 2. The pump then runs as normal 3, until an increased load on the pump is detected 4 by the motor drawing a higher level of current. This is indicative of the motor's torque increasing because it is attempting to maintain speed against a larger force, such as ragging. The clean cycle then starts by cutting power to the pump, 5. Typically the inertia of the pump and the fluid continuing to pass therethrough will keep the pump running in the same direction for a short period of time after the power is cut - the pump will "coast" to a rest. Thus after the power is cut to the motor it will wait 5 for a pre-defined time A before progressing to the next step. The time A can be varied by the user and is typically larger for larger pumps.

After this time the pump goes into reverse, 6, also for a pre-defined time B which may also be varied by the user. The pump stops again 7 by cutting power and allowing it to coast to a rest. After a further period of time A the pump goes into a forward direction for pre-defined time C.

The above clean cycle (steps 5 to 8) is repeated for pre-defined number of times, which again may be varied by the user. At this point the clean ends and the device has a number of options.

If the rag is cleared, indicated by a normal current being demanded by the motor in the forward direction, then it will resume pumping as normal, step 3. If not, the device will attempt to clean again by reverting to the clean cycle (steps 5 to 8). The device will continue on this cycle until a maximum number of clean cycles is met at which point it would trip the pump, 9.

The maximum number of cleans allowed counter will be reset after the pump has finished pumping.

Thus as noted above, when the pump is under or more likely above normal operation, if the "activation level" is met, a clean cycle is then initiated on the motor. The clean cycle is fully customisable but consists of but not limited to and not necessarily in the order of; forward rotation for a user adjustable time, reverse rotation for user adjustable time. The number of direction changes and duration can be changed by the user. If the device is unable to return the pump to is original loading tolerance band after a user defined number of tries, the motor will trip an alarm.

As the real time current of the pump is monitored the device also acts as motor protection as it contains a thermal image algorithm of the motor. This will allow the device to act like a traditional motor thermal overload.

An advantage of certain embodiments of the present invention is that they provide an economical de-ragging solution for small to medium wastewater pumps where the unit detects a change in current and immediately reverses the pump to dislodged debris built up during normal flow.

Due to its physical size, the device of certain embodiments of the invention have been designed to be retro-fitted into existing pump control panels.

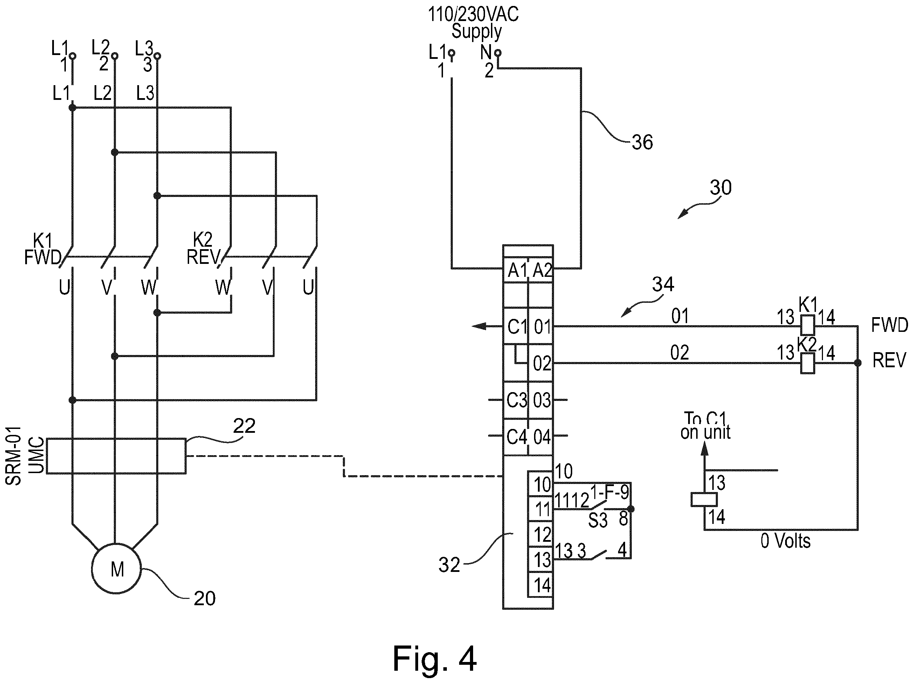

Fig. 4 shows a circuit diagram for the Fig. 1 embodiment and illustrates the ease at which the present device can be retrofitted to an existing pump. The pre-existing pump motor 20 is supplied by a three-phase power supply L1, L2, L3. A contactor K1 is provided to engage the motor 20 into a forward direction, or to disengage the power from the motor 20 and allow it to stop. The system can be modified to utilise an embodiment of the present invention by connecting a contactor K2 in parallel to the switch K1. The switch K2 can be engaged to direct the motor 20 into a reverse direction.

Also added to the existing configuration, downstream of the switches K1 and K2 and upstream of the motor 20, is a current sensor 22 to monitor the current being supplied to the motor 20. The current sensor is connected to a control system 30.

The control system 30 has an input interface 32, an output interface 34 and a power supply 36. The input signals are received and processed by the input interface 32 and the appropriate outputs are activated, as described above with respect to figure 1. The outputs Q1 and Q2 from the output interface 34 control the contactors K1 and K2 which in turn control the motor 20.

The existing coil connection to the contactor K1 is rerouted to the deragger control system 30 by the use of an interposing relay. This provides the run signal. From there the deragger takes control of the pump 20.

When monitoring the pump current, the device may be activated at programmable set points. Moreover the pump may be customisable by the user.

Improvements and modifications may be made without departing from the scope of the invention which is solely defined by the appended claims.

## Claims

1. A pump apparatus comprising a wastewater pump and a control device (30) for a pump, the pump being a mechanically switched pump and capable of being operated in a forward (8) and a reverse (6) direction, the control device (30) comprising:
a monitoring mechanism to monitor the torque of the pump by measuring the current at which the pump is operating,
a control mechanism to control the direction of the pump and being capable of selectively directing the pump to (i) stop (5) (ii) operate in a reverse direction (6) and (iii) operate in a forward direction (8);
wherein the control mechanism is adapted to control the pump to (a) stop (5) by stopping power to the pump and allowing it to coast to a rest and (b) operate in a reverse direction (6) (c) stop (7) by stopping power to the pump and allowing it to coast to a rest, (d) operate in a forward direction (8), and direct the pump into a series of-said stop (5), said reverse (6), said stop (7) and said forward (8) cycles of the pump ) with a user-adjustable stopping period between direction changes when the monitoring mechanism detects the torque of the pump (4) is above a pre-determined value,
and wherein, whilst the number of pump cycles (5,6,7,8) is less than or equal to a pre-defined maximum number of pump cycles (5,6,7,8), the control mechanism is further adapted to direct the pump into the series of reverse and forward cycles of the pump (5,6,7,8) until the torque detected by the monitoring mechanism is below a further pre-determined value.

2. A pump apparatus as claimed in claim 1, wherein the mechanically switched pump comprises one of a direct online pump or a star/delta pump.

3. A pump apparatus as claimed in any preceding claim, further comprising each forward (8) and reverse (6) stage in the cycle lasting for 1 to 20 seconds, wherein optionally each forward (8) and reverse (6) stage in the cycle lasts for 3-20 seconds.

4. A pump apparatus as claimed in any preceding claim, wherein each forward (8) and reverse (6) stage in the cycle lasts for a time period which may be set and varied by a user.

5. A pump apparatus as claimed in any preceding claim, wherein the monitoring mechanism is adapted to monitor the pump torque with regard to potential overloading of the pump.

6. A pump apparatus as claimed in any preceding claim, wherein the control mechanism is adapted to control the pump or another device in response to a torque breaching a pre-determined level (4), which is indicative of the pump overloading or being in danger of overloading.

7. A pump apparatus as claimed in any preceding claim, wherein the control device comprising the components for monitoring the torque of the pump and the components adapted to monitor the potential overloading of the pump are provided on the same device.

8. A pump apparatus as claimed in any preceding claim, wherein on start-up, the pump is adapted to proceed through a reverse and forward cycle (2).

9. A pump apparatus as claimed in any preceding claim, wherein the pump starts at full power, without a restriction in the power.

10. A pump apparatus as claimed in any preceding claim, wherein the monitoring mechanism comprises a monitoring means to detect any sudden change in the current supplied to the motor, and the control mechanism is adapted to respond to such an event.

11. A pump apparatus as claimed in any preceding claim, wherein the pump has a power rating of less than 25kW preferably less than 9kW.

12. A pump apparatus as claimed in any preceding claim, comprising a monitoring mechanism to monitor, directly or indirectly, the thermal stability of the pump, wherein the monitoring mechanism to monitor the torque of the pump and the monitoring mechanism to monitor the thermal stability of the pump are provided on the same device.

## Patentansprüche

1. Pumpeneinrichtung, bestehend aus einer Abwasserpumpe und einer Steuervorrichtung (30) für eine Pumpe, wobei die Pumpe eine mechanisch umschaltbare Pumpe ist und in Vorwärtsrichtung (8) sowie in Rückwärtsrichtung (6) betrieben werden kann, die Steuervorrichtung (30) umfassend:
einen Überwachungsmechanismus zur Überwachung des Drehmoments der Pumpe durch Messung des Stroms, mit dem die Pumpe betrieben wird,
einen Steuermechanismus zur Steuerung der Drehrichtung der Pumpe, der in der Lage ist, die Pumpe wahlweise (i) anzuhalten (5), (ii) in Rückwärtsrichtung (6) zu laufen und (iii) in Vorwärtsrichtung (8) zu laufen;
wobei der Steuermechanismus dazu eingerichtet ist, die Pumpe so zu steuern, dass sie (a) anhält (5), indem die Stromversorgung der Pumpe unterbrochen und ein Auslaufen bis zum Stillstand ermöglicht wird, und (b) in einer Rückwärtsrichtung arbeitet (6), (c) anhält (7), indem die Stromversorgung der Pumpe unterbrochen und ein Auslaufen bis zum Stillstand ermöglicht wird, (d) in einer Vorwärtsrichtung arbeitet (8), und die Pumpe in eine Folge der Anhalte- (5), Rückwärts- (6), Anhalte- (7) und Vorwärtszyklusabläufe (8) der Pumpe leitet, mit einer vom Benutzer einstellbaren Anhalteperiode zwischen Richtungswechseln, wenn der Überwachungsmechanismus erkennt, dass das Drehmoment der Pumpe (4) über einem vorbestimmten Wert liegt,
und wobei, solange die Anzahl der Pumpenzyklen (5,6,7,8) kleiner als eine oder gleich einer vordefinierten maximalen Anzahl von Pumpenzyklen (5,6,7,8) ist, der Steuermechanismus ferner dazu eingerichtet ist, die Pumpe in die Folge von Rückwärts- und Vorwärtszyklen der Pumpe (5,6,7,8) zu leiten, bis das vom Überwachungsmechanismus erkannte Drehmoment unter einem weiteren vorbestimmten Wert liegt.

2. Pumpeneinrichtung nach Anspruch 1, wobei die mechanisch geschaltete Pumpe entweder eine Direkt-Online-Pumpe oder eine Stern-Dreieck-Pumpe ist.

3. Pumpeneinrichtung nach einem der vorstehenden Ansprüche, wobei ferner jede Vorwärts- (8) und Rückwärtsphase (6) des Zyklus 1 bis 20 Sekunden dauert, wobei wahlweise jede Vorwärts- (8) und Rückwärtsphase (6) des Zyklus 3 bis 20 Sekunden dauert.

4. Pumpeneinrichtung nach einem der vorstehenden Ansprüche, wobei jede Vorwärts- (8) und Rückwärtsphase (6) im Zyklus eine Zeitspanne dauert, die vom Benutzer eingestellt und variiert werden kann.

5. Pumpeneinrichtung nach einem der vorstehenden Ansprüche, wobei der Überwachungsmechanismus dazu ausgelegt ist, das Drehmoment der Pumpe im Hinblick auf eine mögliche Überlastung der Pumpe zu überwachen.

6. Pumpeneinrichtung nach einem der vorstehenden Ansprüche, wobei der Steuermechanismus so ausgelegt ist, dass er die Pumpe oder eine andere Vorrichtung als Reaktion auf ein Drehmoment steuert, das einen vorgegebenen Wert (4) überschreitet, was darauf hindeutet, dass die Pumpe überlastet ist oder zu überlasten droht.

7. Pumpeneinrichtung nach einem der vorstehenden Ansprüche, wobei die Steuervorrichtung, die die Komponenten zur Überwachung des Drehmoments der Pumpe und die Komponenten zur Überwachung einer möglichen Überlastung der Pumpe umfasst, auf derselben Vorrichtung bereitgestellt ist.

8. Pumpeneinrichtung nach einem der vorstehenden Ansprüche, wobei die Pumpe beim Anlaufen so ausgelegt ist, dass sie einen Rückwärts- und einen Vorwärtszyklus (2) durchläuft.

9. Pumpeneinrichtung nach einem der vorstehenden Ansprüche, wobei die Pumpe mit voller Leistung anläuft, ohne dass die Leistung gedrosselt wird.

10. Pumpeneinrichtung nach einem der vorstehenden Ansprüche, wobei der Überwachungsmechanismus ein Überwachungsmittel zum Erfassen einer plötzlichen Änderung des dem Motor zugeführten Stroms umfasst und der Steuermechanismus so ausgelegt ist, dass er auf ein solches Ereignis reagiert.

11. Pumpeneinrichtung nach einem der vorstehenden Ansprüche, wobei die Pumpe eine Nennleistung von weniger als 25 kW, vorzugsweise weniger als 9 kW, aufweist.

12. Pumpeneinrichtung nach einem der vorstehenden Ansprüche, umfassend einen Überwachungsmechanismus zur direkten oder indirekten Überwachung der thermischen Stabilität der Pumpe, wobei der Überwachungsmechanismus zur Überwachung des Drehmoments der Pumpe und der Überwachungsmechanismus zur Überwachung der thermischen Stabilität der Pumpe an derselben Vorrichtung bereitgestellt sind.

## Revendications

1. Appareil de pompage comprenant une pompe à eaux usées et un dispositif de contrôle (30) pour une pompe, la pompe étant une pompe à commutation mécanique et capable d'être actionnée dans un sens avant (8) et un sens arrière (6), le dispositif de contrôle (30) comprenant :
un mécanisme de surveillance pour surveiller le couple de la pompe en mesurant le courant auquel la pompe fonctionne,
un mécanisme de contrôle pour contrôler le sens de la pompe et capable d'orienter sélectivement la pompe vers (i) l'arrêt (5), (ii) le fonctionnement dans un sens arrière (6) et (iii) le fonctionnement dans un sens avant (8) ;
dans lequel le mécanisme de contrôle est conçu pour contrôler (a) l'arrêt (5) de la pompe, en coupant l'alimentation de la pompe et en la laissant s'arrêter en roue libre et (b) le fonctionnement dans un sens arrière (6), (c) l'arrêt (7) en coupant l'alimentation de la pompe et en la laissant s'arrêter en roue libre, (d) le fonctionnement dans un sens avant (8), et l'orientation de la pompe dans une série desdits cycles d'arrêt (5), de marche arrière (6), d'arrêt (7) et de marche avant (8) de la pompe, avec une période d'arrêt réglable par l'utilisateur entre les changements de sens lorsque le mécanisme de surveillance détecte que le couple de la pompe (4) est supérieur à une valeur prédéterminée, et dans lequel,
pendant que le nombre de cycles de pompage (5,6,7,8) est inférieur ou égal à un nombre maximal prédéfini de cycles de pompage (5,6,7,8), le mécanisme de contrôle est en outre conçu pour orienter la pompe dans la série de cycles en marche avant et en marche arrière (5,6,7,8) jusqu'à ce que le couple détecté par le mécanisme de surveillance soit inférieur à une autre valeur prédéterminée.

2. Appareil de pompage selon la revendication 1, dans lequel la pompe à commutation mécanique comprend l'une parmi une pompe en ligne directe ou une pompe étoile-triangle.

3. Appareil de pompage selon l'une quelconque revendication précédente, comprenant en outre chaque phase de marche avant (8) et de marche arrière (6) dans le cycle durant pendant 1 à 20 secondes, dans lequel éventuellement chaque phase de marche avant (8) et de marche arrière (6) dans le cycle dure pendant 3 à 20 secondes.

4. Appareil de pompage selon l'une quelconque revendication précédente, dans lequel chaque phase de marche avant (8) et de marche arrière (6) dans le cycle dure pendant une période de temps qui peut être définie et modifiée par un utilisateur.

5. Appareil de pompage selon l'une quelconque revendication précédente, dans lequel le mécanisme de surveillance est conçu pour surveiller le couple de pompe en ce qui concerne une surcharge potentielle de la pompe.

6. Appareil de pompage selon l'une quelconque revendication précédente, dans lequel le mécanisme de contrôle est conçu pour contrôler la pompe ou un autre dispositif en réponse à un couple dépassant un niveau prédéterminé (4), ce qui indique que la pompe est en surcharge ou risque d'être en surcharge.

7. Appareil de pompage selon l'une quelconque revendication précédente, dans lequel le dispositif de contrôle comprenant les composants permettant de surveiller le couple de la pompe et les composants conçus pour surveiller la surcharge potentielle de la pompe sont prévus sur le même dispositif.

8. Appareil de pompage selon l'une quelconque revendication précédente, dans lequel au démarrage, la pompe est conçue pour effectuer un cycle de marche arrière et de marche avant (2).

9. Appareil de pompage selon l'une quelconque revendication précédente, dans lequel la pompe démarre à pleine puissance, sans restriction de puissance.

10. Appareil de pompage selon l'une quelconque revendication précédente, dans lequel le mécanisme de surveillance comprend un moyen de surveillance pour détecter tout changement brusque du courant fourni au moteur, et le mécanisme de contrôle est conçu pour réagir à un tel événement.

11. Appareil de pompage selon l'une quelconque revendication précédente, dans lequel la pompe a une puissance nominale inférieure à 25 kW, de préférence inférieure à 9 kW.

12. Appareil de pompage selon l'une quelconque revendication précédente, comprenant un mécanisme de surveillance pour surveiller, directement ou indirectement, la stabilité thermique de la pompe, dans lequel le mécanisme de surveillance pour surveiller le couple de la pompe et le mécanisme de surveillance pour surveiller la stabilité thermique de la pompe sont prévus sur le même dispositif.
